# EUROPEAN PATENT APPLICATION

(11) **EP 0 657 498 A1**
(43) Date of publication of application: **14.06.1995**
(21) Application number: 93119932.7
(22) Date of filing: 10.12.1993
(51) Int. Cl.: C08K 5/523, C08K 5/5399, C08L 71/12, C08L 77/00

(54) **Thermoplastic composition comprising a compatibilized polyphenylene ether-polyamide base resin, one or more phosphorus compounds**

(71) Applicant: GENERAL ELECTRIC COMPANY, Schenectady, NY 12345 (US)
(72) Inventor: Shaw, Jeremy Paul, NL-4600 AC Bergen op Zoom (NL); Koevoets, Christiaan Henricus Johannes, NL-4600 AC Bergen op Zoom (NL); van der Poel, Bartholomeus Josephus Maria, NL-4600 AC Bergen op Zoom (NL)
(74) Representative: Grever, Frederik

(57) **Abstract**

The present invention deals with a thermoplastic composition comprising (a) a compatibilized polyphenylene ether-polyamide base resin, and (b) 1-40 parts by weight per 100 parts by weight of polyphenylene ether present in (a) of one or more phosphorus compounds with the formula O=P-[Z]₃, in which each Z can be the same or a different group and wherein each Z sterically hinders the reactivity of the O=P≡ moiety of the phosphorus compound.

The composition may further comprise (c) 1-30 parts by weight per 100 parts by weight of polyamide present in (a) of one more compounds containing a bound triazine radical from the group of cyanuric acid and its derivatives.

The use of special phosphorus compounds as described above makes it possible to manufacture the compositions in a simple way while obtaining stable compositions.

## Description

The invention relates to thermoplastic compositions comprising (a) a compatibilized polyphenylene ether-polyamide resin, and (b) 1-40 parts by weight per 100 parts by weight of polyphenylene ether present in (a) of one or more phosphorus compounds.

The thermoplastic compositions may further comprise (c) 1-30 parts by weight per 100 parts by weight of polyamide present in (a) of one more compounds containing a bound triazine radical from the group of cyanuric acid and its derivatives.

The invention also relates to articles formed out of the compositions of the invention.

US-A-4,866,114 discloses thermoplastic polyphenylene ethers/polyamide molding materials which contain as essential components a component A and a component B. Component A consists of a modified polyphenylene ether and a compound containing bound phosphorus. Component B consists of one or more polyamides and one or more compounds containing a bound triazine radical from the group consisting of cyanuric acid and its derivatives.

The compound containing bound phosphorus can be chosen from a great variety of compounds. Among those monomeric, cyclic and polymeric compounds have been mentioned in US-A-4,866,114. Triphenyl phosphate is said to be "very particularly suitable".

The composition of US-A-4,866,114 is prepared by first preparing components A and B and then bringing them together.

The compositions of US-A-4,866,114 are very useful compositions combining good mechanical properties and good flame retardant properties.

It has been found that it is necessary in the manufacture of the composition of US-A-4,866,114 to prevent mixing the polyamide with the phosphate prior to having blended the phosphate with the polyphenylene ether or the modified polyphenylene ether. If the unblended phosphate is directly blended with the polyamide at elevated temperatures where the components are in a viscous state, a sharp increase in torque may occur. This occurs in particular when the mixing temperatures and the mixing time periods are not well controlled. This makes it somewhat complicated to prepare the compositions of US-A-4,866,114 in that a special mixing sequence has to be observed.

It has further been found that the presence of compounds containing a bound triazine radical is not absolutely necessary.

The invention resides on the finding that phosphorus compounds with the formula O=P-[Z]₃ in which each Z can be the same or a different group and wherein each Z sterically hinders the reactivity of the O=P≡ moiety of the phosphorus compound do not suffer from the above described disadvantage.

Suitable phosphorus compounds (c) are aromatic diphosphates of formula (1): 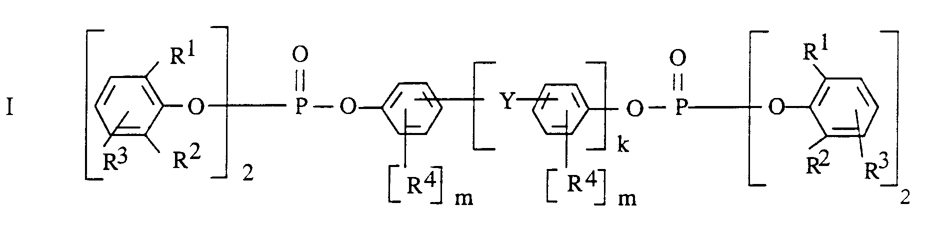
wherein R¹ and R² are, the same or different, an alkyl group, R³ is a hydrogen atom or an alkyl group, R⁴ is a hydrogen atom or a lower alkyl, Y is a bonding arm, -CH₂-, -C(CH₃)₂-, -S-, -SO₂-, -CO-, -O- or -N=N-, k is 0 or 1 and m is an integer of 0 to 4 or a tripiperidine phosphine oxide. Suitable alkylgroups for R¹, R² and R³ in formula I are groups like methyl, ethyl and t.butyl groups.

Preferred polyphenylene ether resins (PPE) and polyamide resins as well as means for providing compatibilized combinations thereof are described below.

In general it is desirable that the polyamide component comprises a continuous phase in the overall composition and, therefore, typically at least 35 percent by weight of the total PPE-polyamide- composition will be comprised of the polyamide component.

Polyphenylene ethers are a well known class of compounds sometimes referred to as polyphenylene oxides. Examples of suitable polyphenylene ethers and processes for their reparation can be found in US A 3,306,874; 3,306,875; 3,257,357; and 3,257,358. Compositions of the present invention will encompass homopolymers, copolymers and graft copolymers obtained by the oxidative coupling of phenolic compounds. The preferred polyphenylene ethers used as base resins in compositions of the present invention will be comprised of units derived from 2,6-dimethyl phenol. Also contemplated are PPE copolymers comprised of units derived from 2,6-dimethyl phenol and 2,3,6-trimethyl phenol.

A particularly useful polyphenylene ether would be poly(2,6-dimethyl-1,4-phenylene ether) having an intrinsic viscosity (I.V.) greater than approximately 0.10 dl/g as measured in chloroform at 25°C. The I.V. will typically be between 0.25 and 0.6 dl/g.

The polyamide resins useful in the practice of the present invention are a generic family of resins known as nylons, characterized by the presence of an amide group (-CONH-). Nylon-6 and nylon-6,6 are the generally preferred polyamides and are available from a variety of commercial sources. Other polyamides, however, such as nylon-4, nylon-12, nylon-6,10, nylon 6,9 or others such as the amorphous nylons may be useful for particular polyphenylene ether-polyamide applications.

The polyamides can be provided by a number of well known processes. Nylon-6, for example, is a polymerization product of caprolactam. Nylon-6,6 is a condensation product of adipic acid and hexamethylenediamine. A nylon-6,6 having an average molecular wieght of approximately 10,000 is especially preferred for many useful polyphenylene ether-polyamide thermoplastic applications. Preferred polyamides will typically have a relative viscosity of at least 35, in accordance with ASTM Test Method D789.

In preferred embodiments of the present invention, a compatibilizing agent may be employed in the preparation of the composition. The two-fold purpose for using compatilizing agents is to improve, in general, the physical properties of the polyphenylene ether-polyamide resin, as well as to enable the use of a greater proportion of the polyamide component. When used herein, the expression "compatibilizing agent" refers to those polyfunctional compounds which interact with either the polyphenylene ether, the polyamide, or both. This interaction may be chemical (e.g. grafting) or physical (e.g. affecting the surface characteristics of the dispersed phases). In either instance the resulting polyphenylene ether-polyamide composition appears to exhibit improved compatibility, particularly as evidenced by enhanced impact strength, mold knit line strength and/or elongation. As used herein, the expression "compatibilized polyphenylene ether-polyamide base resin" refers to those compositions which have been physically or chemically compatibilized with an agent as discussed above, as well as those compositions which are physically compatible without such agents, as taught in US-A-3,379,792.

Examples of the various compatibilizing agents that may be employed in the practice of the present invention include: a) liquid diene polymers, b) epoxy compounds, c) oxidized polyolefin wax, d) quinones, e) organosilane compounds and f) polyfunctional compounds as described hereinafter.

Liquid diene polymers (a) suitable for use herein include homopolymers of a conjugated diene with at least one monomer selected from the group consisting of other conjugated dienes; vinyl monomer, e.g. styrene and alpha-methyl styrene; olefins, e.g. ethylene, propylene, butene-1, isobutylene, hexene-1, octene-1 and dodecene-1, and mixtures thereof, having a number average molecular weight of from 150 to 10,000 preferably 150 to 5,000. These homopolymers and copolymers can be produced by the methods described in, for example, US-A-4,054,612; 3,876,721 and 3,428,699 and include, among others, polybutadiene, polyisoprene, poly(1,3-pentadiene), poly(butadiene-isoprene), poly(styrene-butadiene), polychloroprene, poly(butadiene-alpha methylstyrene), poly(butadiene-styrene-isoprene), poly(butylene-butadiene) and the like.

Epoxy compounds (b) suitable for use in the practice of the present invention include: (1) epoxy resins produced by condensing polyhydric phenols (e.g. bisphenol-A, tetrabromobisphenol-A, resorcinol and hydroquinone) and epichlorohydrin; (2) epoxy resins produced by condensing polyhydric alcohols (e.g. ethylene glycol, propylene glycol, butylene glycol, polyethylene glycol, polypropylene glycol, pentaerythritol and trimethylolethane and the like) and epichlorohydrin, (3) glycidyletherified products of monohydric alcohols and monohydric phenols including phenyl glycidylether, butyl glycidyl ether and cresyl glycidylether; (4) glycidyl derivates of animo compounbds for example, the diglycidyl derivate of aniline, and (5) epoxidized products of higher olefinic or cycloalkene, or natural unsaturated oils (e.g. soybean) as well as of the foregoing liquid diene polymers.

Oxidized polyolefin waxes (c) are well known and a description thereof and processes for the production of the same are found in US-A-3,822,227 and 3,756,999 and German Patent Publications 3,047,915 and 2,201,862.

Generally, these are prepared by an oxidaton or suspension oxidation of polyolefin. An especially preferred polyolefin wax is "Hoechst Wachs".

Quinone compounds (d) suitable for use herein are characterized as having in the molecule of the unsubstituted derivative at least one 6 membered carbon ring; at least two carbonyl groups in the ring structure, both of which may be in the same or, if more than one ring, different rings, provided that they occupy positions corresponding to the 1,2- or 1,4-orientation of the monocyclic quinone; and at least two carbon-carbon double bonds in the ring structure, said carbon-carbon double bounds and carbonyl carbon-carbon double bonds in the ring structure, said carbon-carbon double bonds and carbonyl carbon-oxygen double bonds being conjugated with respect to each other. Where more than one ring is present in the unsubstituted quinone, the rings may be fused, non-fused or both: non-fused rings may be bound by a direct carbon-carbon double bond or by a hydrocarbon radical having conjugated unsaturation such as = C-C=.

Substituted quinones are also within the scope of the present invention. The degree of substitution; where substitution is desired, may be from one to the maximum number of replaceable hydrogen atoms. Examplary of the various substituents that may be present on the unsubstituted quinone structures include halogen, e.g. chlorine, bromine, flourine, etc. hydrocarbon radicals inclusding branched and unbranched, saturated and unsaturated alkyl, aryl, alkyl aryl and cycloalkyl radicals and halogenated derivatives thereof; and similar hydrocarbons having hetero atoms therein, articularly oxygen, sulfur or phosphorous and wherein the same connects the radical to the quinone ring (e.g. oxygen link).

Examplary of the various quinones there may be given 1,2- and 1,4-benzoquinone; 2,6-diphenyl quinone; tetramethyldiquinone; 2,2'- and 4,4'-diphenoquinone; 1,2-, 1,4- and 2,6-naphthoquinone; chloranils; 2-chloro- 1,4-benzoquinone; 2,6-dimethyl benzoquinone and the like.

Organosilane compounds (e) suitable as compatibilizing agents are characterized as having in the molecule (a) at least one silicon atom bonded to a carbon through an oxygen link and (b) at least one carbon-carbon double bond or carbon-carbon triple bond and/or a functional group selected from the group consisting of an amine group or a mercapto group provided that the functional group is not directly bonded to the silicon atom.

In such compounds, the C-O-Si component is generally present as an alkoxyl or acetoxy group bonded directly to the silicon atom, wherein the alkoxy or acetoxy group generally has less than 15 carbon atoms and may also contain hetero atoms (e.g. oxygen). Additionally, there may also be more than one silicon atom in the compound, such multiple silicon atoms, if present, being linked through an oxygen link (e.g. siloxanes), a silicon bond; or a bifunctional organic radical (e.g. methylene or phenylene groups).

Examples of suitable organosilane compounds include: gamma amino propyltriethoxy silane, 2-(3-cyclohexanyl)ethyl trimethoxy silane; 1,3-divinyl tetraethoxy silane; vinyl tris-(2-methoxyethoxy)silane; 5-bicycloheptenyl triethoxy silane and gamma mercapto propyl trimethoxy silane.

Polyfunctional compounds (f) which may be employed as compatibilizer in the practice of the present invention are of three types. The first type of polyfunctional compounds are those having in the molecule both (a) a carbon-carbon double bond or a carbon-carbon triple bond and (b) at least one carboxylic acid, acid anhydride, acid halide, anhydride, acid halide anhydride, acid amide, acid ester, imide, amino, or hydroxy group. Examples of such polyfunctional compounds include maleic acid; maleic anhydride; fumaric acid; citraconic acid; itatonic acid; maleimide; maleic hydrazide; reaction products resulting from a diamine and maleic anhydride, maleic acid, fumaric acid, etc.; dichloro maleic anhydride; maleic acid amide; unsaturated dicarboxylic acids (e.g. acrylic acid, butenoic acid, methacrylic acid, t-ethylacrylic acid, pentenoic acid); decenoic acids, undecenoic acids, dodecenoic acids, linoleic acid, etc.); esters, acid amides or anhydrides of the foregoing unsaturated carboxylic acids; unsaturated alcohols (e.g. alkyl alcohol, crotyl alcohol, methyl vinyl carbinol, 4-pentene-1-ol, 1,4-hexadiene-3-ol, 3-butene-1,4-diol, 2,5-dimethyl-3-hexene-2,5-diol and alcohols of the formula CₙH₂ₙ₋₅OH, CₙH₂ₙ₋₇OH and CₙH₂ₙ₋₉OH, wherein n is a positive integer up to 30), unsaturated amines resulting from replacing from replacing the -OH group(s) of the above unsaturated alcohols with NH₂ groups; and functionalized diene polymers and copolymers. Of these, one of the preferred compatibilizing agents for compositions of the present invention is maleic anhydride.

The second group of polyfunctional compatibilizer compounds suitable for use herein are charaterized as having both (a) a group represented by the formula (OR) wherein R is hydrogen or an alkyl, aryl, acyl or carbonyl dioxy group and (b) at least two groups each of which may be the same or different selected from carboxylic acid, acid halide, acid anhydride, anhydride, acid halide anhydride, acid ester, acid amide, imido, amino and salts thereof. Typical of this group of compatibilizers are the aliphatic polycarboxylic acids, acid esters and acid amides represented by the formula:

(R^{I}O)ₘR(COOR^{II})ₙ(CONR^{III}_{R}^{IV})ₛ

wherein R is a linear or branched chain, saturated aliphatic hydrocarbon of from 2 to 20, preferably 2 to 10, carbon atoms; R^{I} is selected from the group consisting of hydrogen or an alkyl,aryl, acyl or carbonyl dioxy group of 1 to 10, preferably 1 to 6, most preferably 1 to 4, carbon atoms, especially preferred is hydrogen; each R^{II} is independently selected from the group consisting of hydrogen or an alkyl or aryl group from 1 to 20 carbon atoms, preferably from 1 to 10 carbon atoms; each R^{III} and R^{IV} is independently selected from the group consisting essentially of hydrogen or an alkyl or aryl group of from 1 to 10, preferably from 1 to 6, most preferably 1 to 4, carbon atoms; m is equal to 1 and (n + s) is greater than or equal to 2, preferably equal to 2 or 3, and n and s are each greater than or equal to zero and wherein (OR^{I}) is alpha or beta to a carbonyl group and at least two carbonyl groups are seperated by 2 to 6 carbon atoms. Obviously, R^{I}, R^{II}, R^{III} and R^{IV} cannot be aryl when the respective substituent has less than 6 carbon atoms.

Illustrative of suitable polycarboxylic acids there may be given citric acid, malic acid, and agaricic acid; including the various commercial forms thereof, such as for example, the anhydrous and hydrated acids. Of these, citric acid is another of the preferred compatibilizing agents. Illustrative of acid esters useful herein include for example, acetyl citrate and mono- and/or di- stearyl citrates and the like. Suitable acid amides useful herein include for example N,N'- diethyl citric acid amide; N-phenyl citric acid amide; N-dodecyl citric acid amide; N,N'-didodecyl citric acid amide and N-dodecyl malic acid present invention. Especially preferred derivates are the salts thereof, including the salts with amines and/preferably, the alkali and alkaline metal salts. Examplary of suitable salts include calcium malate, calcium citrate, potassium malate and potassium citrate.

The third group of polyfuntional compatibilizer compounds suitable for use herein are characterized as having in the molecule both (a) an acid halide group, most preferably an acid chloride group and (b) at least one carboxylic acid, carboxylic acid anhydride, acid ester or acid amide group, preferably a carboxylic acid or carboxylic acid anhydride group. Exemplary of compatibilizers within this group there may be given trimellitic anhydride acid chloride, chloroformyl succinic anhydride, chloro formyl succinic acid, chloroformyl glutaric anhydride, chloroformyl glutaric acid, chloroacetyl succinic anhydride, chloroacetylsuccinic acid, trimellitic acid chloride and chloroacetyl glutaric acid. Among these, trimellitic anhydride acid chloride is preferred. Furthermore, it is especially preferred that compatibilizers of this group be prereacted with at least a portion of the polyphenylene ether whereby the compatibilizing agent is a PPE-functionalized compound.

Each of the foregoing compatibilizing agents are more fully described in US-A-4,315,086 and 4,642,358; and European Patent Application No. 04640.

The foregoing compatibilizing agents may be used alone or in any combination of one another. Furthermore, they may be added directly to the melt blend or precompounded with either or both the polyphenylene ether and polyamide as well as with other resinous materials employed in the preparation of the compositions of the present invention. With many of the foregoing compatibilizing agents, particularly the polyfunctional compounds, even greater improvement in compatibility is found where at least a portion of the compatibilizing agent is precompounded with all or part of the polyphenylene ether. It is believed that such precompounding may cause the compatibilizing agent to react with the polymer and, consequently, functionalize that polymer as noted above for example, the polyphenylene oxide may be precompounded with trimellitic anhydride acid chloride to form an anhydride functionalized polyphenylene ether which has improved compatibility with the polyamide compared to a non-functionalized ether.

Where the compatibilizing agent is employed in the preparation of the compositions of the present invention, the initial amount used will be dependent upon the specific compatibilizing agent chosen and the specific polymeric system to which is added.

It is possible to use in the composition according to the invention any other known compatibilisation system. Other systems have been described for example in US-4,866,114.

Where chemical resistance is a desirable property of the thermoplastic resin, it will ordinarily be necessary that the polyamide resin form a continuous phase of the resin composition. Therefore, to avoid a phase inversion whereby the polyamide phase is discontinuous, the preferred compositions of the present invention will be comprised of a polyamide resin in an amount equal to or greater than approximately 35 percent by weight of the total base resin composition.

It is possible to incorporate in the composition according to the invention one or more impact modifiers. All impact modifiers as generally used for compositions comprising a polyphenylene ether, a polyamide or a combination of a polyphenylene ether and a polyamide can be used. Particularly suitable are the socalled blockcopolymers, like triblock copolymers and diblockcopolymers.

A variety of useful polyphenylene ether-polyamide compositions can be provided which include varying amount of the impact modifier. Typically, improved properties, especially regarding the ductile behavior of the plastic, will be noted when 1 to 30 parts ny weight of an impact modifier are utilized per 100 parts of the polyphenylene ether and polyamide components taken together.

The diblock or triblock copolymer rubber additive which may be used in compositions of the present invention is a thermoplastic rubber comprised of one or two alkenyl aromatic blocks which are typically styrene blocks and a rubber block e.g. a butadiene block which may be partially hydrogenated.

The thermoplastic composition of the invention may comprise fillers like glass fibers or talc.

Glass reinforced grades of compatibilized polyphenylene ether-polyamide resin compositions are extremely important in thermoplastic applications requiring a unique combination of physical properties such as impact strength, rigidity and modulus, dimensional stability, high heat resistance as well as chemical resistance. Principally, glass filled PPE-polyamide compositions of the present invention offer good physical properties. Ten to thirty weight percent loadings of chopped glass fiber can typically be utilized to advantage in these compositions. These weight percents would be based upon the weight of the polyphenylene ether resin, the polyamide resin, and the glass, taken together. More or less glass (e.g. 5 to 45 weight percent) can also be utilized in certain circumstances. Less than about 5 parts glass begins to perform like an unreinforced product. More than about 45 weight percent glass begins to interfere with the ability of the resin to coat and bind the glass effectively.

The polymer composition according to the invention further comprises at least one flame retardant agent: (b) one or more phosphorus compounds meeting the requirements of claim 1 of this application.

The composition can further comprise (c) a compound containing a bound triazine radical from the group of cyanuric acid and its derivatives.

Examples of suitable compounds (b) and a process for their preparation have been described in EP-A-0 509 506. Particularly suitable compounds (c) are the compounds with the following formulae: 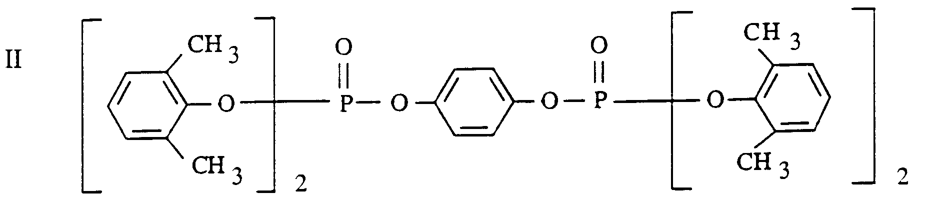 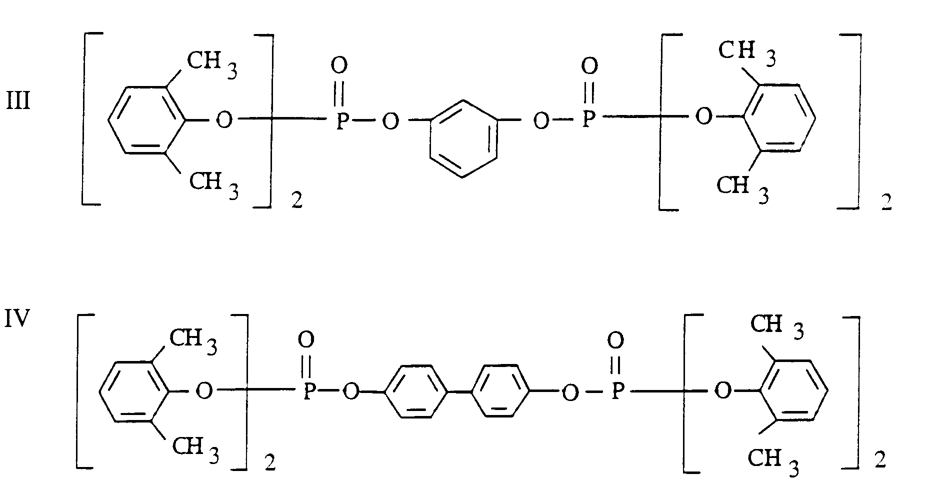
Suitable compounds (c) have been described in US-A-4,866,114. Examples of cyanuric acid derivatives are melamine, melam, melem, melamine cyanurate, methylene dimelamine, ethylene dimelamine and p-xylylidenedimelamine. Examples of suitable cyanuric acid derivatives include salts of melamine and inorganic acids e.g. melamine phosphate, reaction products of melamine with triazolidine -3,5-diones or barbituric acid derivates and formaldehyde, as well as melamine in combination with thermoplastic polyacetals.

All patents and patent applications mentioned above are incorporated herein by reference.

The invention will be further illustrated by the following examples.

### Examples

### First series

### Preparation of compatibilized polyphenylene ether polyamide blend.

A polyphenylene ether derived from 2,6-dimethyl phenol with an intrinsic viscosity of 40 ml/g (as measured in chloroform at 25°C) and citric acid were introduced at the throat of a WP 28 compounder with a co-rotating twin screw; downstream in the compounder a polyamide 6,6 with a viscosity number of 145 ml/g (measured according to ISO 307 in sulphuric acid) was added. The compounding conditions were such that an average temperature of 320°C was maintained.

The overall composition of this blend was 59.3% by weight of the polyphenylene ether, 0.7% by weight citric acid and 40% by weight of polyamide 6,6.

### Preparation of flame retardant compositions:

The compatibilized blend (54g) was admixed in a Haake bowl with 6 grams of a resorcinoldiphosphate, with the following formula V: 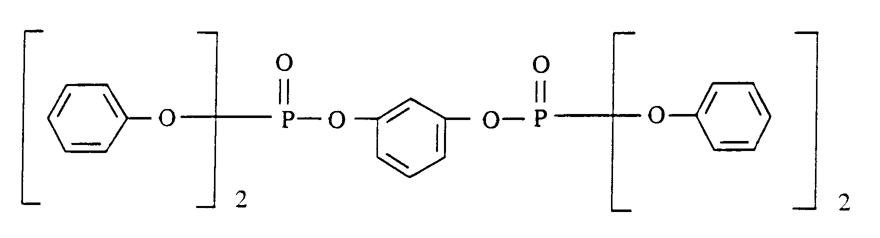
The conditions were as follows:
Temperature 280°C
Screw speed 100
Residence time 15 minutes

During the mixing, after the material had fully melted the torque was registered at about 180 g.m (Haake bowl units). After 6 minutes the torque had rapidly risen to over 2000 g.m which was accompanied by a sharp temperature rise of around 40°C.

This is an indication that some undesired reaction takes place in the mixing equipment.

The cause of the reaction has been established as follows. The same polyamide 6,6 as mentioned above was blended (60 grams) under the same conditions.

In those tests 6 grams of each of the phosphates as mentioned in the following table A were added to 54g of polyamide 6,6. By measuring the torque the presence or absence of a reaction was registered. The results are also indicated in table A

**Table A**

| Added phosphate | Reaction |
|---|---|
| . diphosphate with formula *II | none |
| . diphosphate with formula *III | none |
| . diphosphate with formula *IV | none |
| . tripiperidine phosphine oxide | none |
| . resorcinol diphosphate with formula * V | yes |
| . triphenylphosphate | yes |

| | |
|---|---|
| * for the formulae see previous pages. | |

From the above mentioned results can be seen that certain phosphates do interact with the polyamide whereas others, as used in the composition of the invention, do not.

As a result no special precautions are required upon manufacturing of the composition according to the invention to avoid reaction between the polyamide and the phosphate.

### Second series

Several compositions were prepared from the following ingredients:
- Compatibilized blend:: the same blend as described for the first series of tests.
- Melamine:: a melamine cyanurate obtained by reacting melamine and cyanuric acid with the following formula VI: 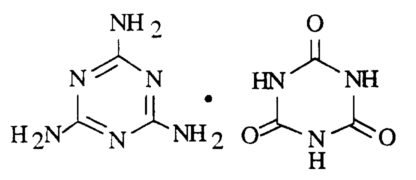
- Diphosphate:: a diphosphate with formula IV
- Glass fibers-1:: glass fibers with a length of 4.5mm and an average diameter of 10 micrometers.
- Glass fibers-2:: glass fibers with a length of 3.2 mm and a diameter of 10 micrometers.
- Talc:: regular grade for filling thermoplastics
The compositions were prepared by feeding all ingredients (with exception of the glass fibres when used) into the throat of a compounder. The glass fibers were fed downstream in the compounder.

The compounded compositions were extruded and pellitized. Test bars were formed by injection molding for determining the rating in accordance with UL 94 (on 1.6 mm bars). The melt viscosity (in accordance with DIN 54811) of the different compositions was determined at 300°C.

The composition of the different blends and the obtained results are given in table B.

**Table B**

| Composition no. | A* | I | B* | II | III | IV | V |
|---|---|---|---|---|---|---|---|
| Parts by weight | | | | | | | |
| . Compatibilized blend | 100 | 85 | 85 | 79 | 54 | 54 | 60 |
| . Melamine | -- | -- | 15 | 6 | 6 | 6 | -- |
| . Diphosphate | -- | 15 | -- | 15 | 20 | 20 | 20 |
| . Glass fibers-1 | -- | -- | -- | -- | 20 | -- | -- |
| . Glass fibers-2 | -- | -- | -- | -- | -- | -- | 20 |
| . Talc | -- | -- | -- | -- | -- | 20 | -- |

| Properties | | | | | | | |
|---|---|---|---|---|---|---|---|
| . UL rating | HB | V-1 | HB | V-0 | V-0 | V-0 | V-1 |
| . Melt viscosity (Pa-s) at shear rate of 576 s-1 | 740 | 346 | 348 | 186 | 76 | 65 | 164 |

| | | | | | | | |
|---|---|---|---|---|---|---|---|
| * Compositions A and B not according to the invention; composition I - V according to the invention | | | | | | | |

As can be seen from the results the compositions according to the invention (no I - V) have generally better flame retardant properties and beter flow properties than the composition A and B which are outside the scope of the claims of the invention.

### Third series

In this series of tests triphenyl phosphate (the preferred phosphorus compound of US-A-4,866,114) has been compared with a diphosphate with formula III.

In the same way as described in the second series of tests two blends were prepared with the composition as shown in table C.

Out of the obtained compositions test bars were formed by injection molding. This was done for each composition under normal conditions (temperature in the barrel about 280°C, holding time 10 s, cooling time 20 s) and under abusive molding conditions (cooling time 100s, all other conditions the same).

For each test five bars were molded for each compostion. The molded compositions were subject to the following tests: UL-rating; E-modulus, tensile strength and Izod unnotched impact strength.

The average value of five tests and the standard deviation (between brackets) are also indicated in table C.

**Table C**

| Compostion (parts by weight) | IV | | D | |
|---|---|---|---|---|
| . Compatibilized blend | 79 | | 79 | |
| . Melamine cyanurate | 6 | | 6 | |
| . Diphosphate with formula III | 15 | | -- | |
| . Triphenylphosphate | -- | | 15 | |

| Properties | After normal molding | after abusive molding | after normal molding | after abusive molding |
|---|---|---|---|---|
| . UL-rating | V-O | | V-O/V-1 | |
| . E-modulus (MPa) | 2790(30) | 2860(50) | 2610(70) | 2320(155) |
| . Tensile strength (MPa) | 57(4) | 65(2) | 58(6) | 38(14) |
| . Izod unnotched impact strength (kJ/M²) | 20(5) | 23(8) | 20(5) | 28(21) |

The above results clearly demonstrate the effect of using the diphosphate according to the invention (composition IV) as compared to the preferred composition of US-A-4,866,114 (composition D).

In the first place can be remarked that the known composition does not always result in a V-O rating (the best) but sometimes in a V-1 rating.

It is also very important to note that the known composition has some instability as evidenced by the high values for the standard deviation in the tests run with test bars molded under abusive molding conditions and made out of known composition D. The test bars molded out of the composition of the invention (composition IV) show a much lower standard deviation before and after abusive molding. This is significant for commercial applications of the compositions.

## Claims

1. A thermoplastic composition comprising (a) a compatibilized polyphenylene ether-polyamide base resin, and (b) 1-40 parts by weight per 100 parts by weight of polyphenylene ether present in (a) of one or more phosphorus compounds with the formula O=P-[Z]₃, in which each Z can be the same or a different group and wherein each Z sterically hinders the reactivity of the O=P≡ moiety of the phosphorus compound.

2. A composition as in claim 1 wherein component (c) is an aromatic diphosphate of formula (1): 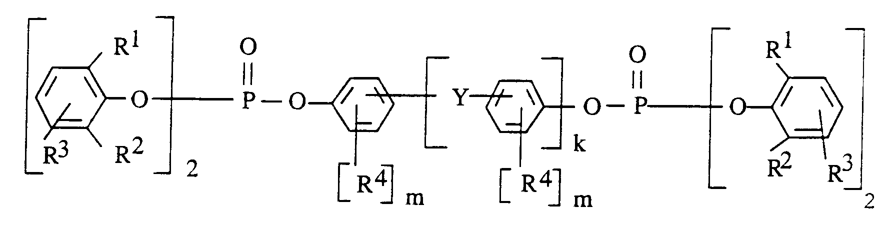 wherein R¹ and R² are, the same or different, an alkyl group, R³ is a hydrogen atom or an alkyl group, R⁴ is a hydrogen atom or an alkyl, Y is a bonding arm, -CH₂-, C(CH₃)₂-, -S-, -SO₂-, -CO-, -O- or N=N-, k= 0 or 1 and m is an integer of 0 to 4 or a tripiperidine phosphine oxide.

3. A composition as in Claim 1 wherein said compatibilized base resin (a) is comprised of (a₁) 5 to 95 weight percent polyphenylene ether resin and (a₂) 95 to 5 weight percent polyamide resin, based upon the weight of (a₁) and (a₂) together.

4. A composition as in Claim 3 wherein said polyamide resin constitutes a continuous phase in an amount greater than 35 weight percent of the compatibilized base resin (a).

5. A composition as in Claim 1 comprising a compatibilizing agent selected from the group consisting of: maleic anhydride, fumaric acid, citric acid, malic acid, and reaction products of a polyphenylene ether and trimellitic anhydride acid chloride.

6. A composition as in Claim 1 wherein said polyphenylene ether resin is a polymer or copolymer comprised of one or more units derived from units selected from the group consisting of 2,6-dimethyl phenol units and 2,3,6-trimethyl phenol units, and wherein said resin has an intrinsic viscosity of 0.25 to 0.6 dl/g as measured in chloroform at 25°C.

7. A composition as in claim 6 wherein said polyphenylene ether is poly(2,6-dimethyl-1,4-phenylene ether).

8. A composition as in Claim 1 wherein said polyamide resin is selected from the group consisting of polyamide 6, and polyamide 6,6.

9. A composition as in claim 2 wherein said aromatic diphosphate is any one of formula II, III or IV:

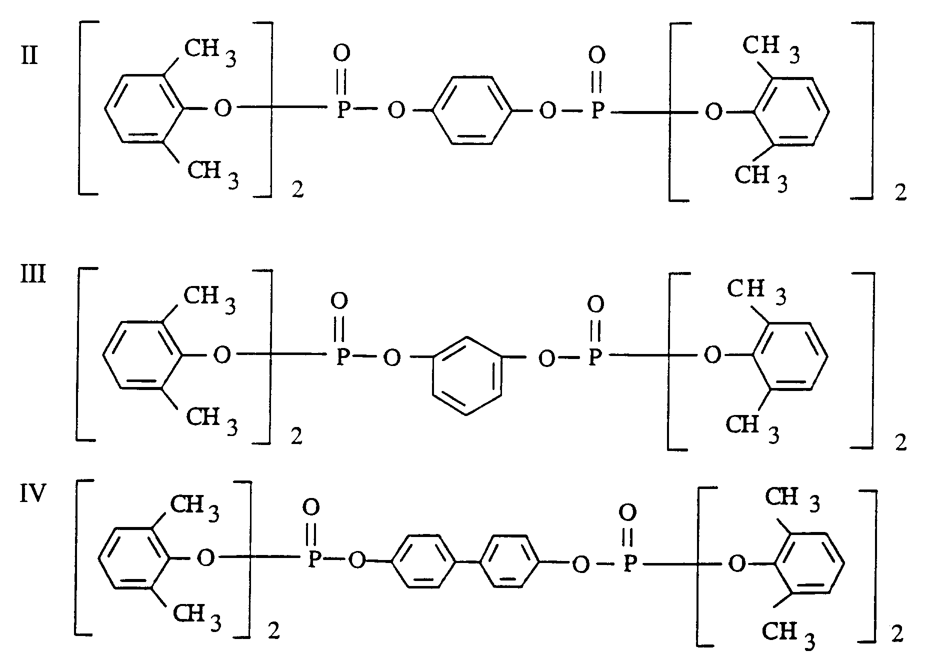

10. A composition as in claim 1 which comprises an agent to improve the impact strength.

11. A composition as in claim 1 which comprises any of the following additives: reinforcing fibers, stabilizers, dyes,pigments, polyolefines.

12. A composition as in claim 1 comprising (c) 1-30 parts by weight per 100 parts by weight of polyamide present in (a) of one more compounds containing a bound triazine radical from the group of cyanuric acid and its derivatives

13. Articles formed out of the composition of claim 1.
